# EUROPEAN PATENT APPLICATION

(11) **EP 0 663 332 A2**
(43) Date of publication of application: **19.07.1995**
(21) Application number: 95300026.2
(22) Date of filing: 04.01.1995
(51) Int. Cl.: B62B 7/06, B62B 9/20, B62B 9/26

(54) **Pushchair**

(30) Priority: 13.01.1994 GB 9400649
(71) Applicant: BRITAX-TEUTONIA KINDERWAGENFABRIK GmbH, D-32112 Hiddenhausen (DE)
(72) Inventor: Heitlinger, Karl-Leo, D-73225 Schwäbisch Gmünd (DE)
(74) Representative: Hollinghurst, Antony

(57) **Abstract**

A push chair has two side assemblies secured spaced apart from and parallel to each other, each side assembly comprising a side coupling unit (18a) to which a front leg (12a) and a rear leg (16a) are each pivotally attached. Each coupling unit (18a) has a main pawl (68a) arranged to engage with a detent (66a) to secure the front and rear legs (12a, 16a) in a predetermined relative orientation. A respective struts (86a) has one and pivotally connected to a respective side coupling unit (18a) and its other end connected to a central pivot joint (88a) arranged to allow the two struts (86a) to pivot relative to one another between a first relative orientation in which they are in line with or at an obtuse angle to one another so as to resist movement of the coupling units (18a) towards one another and a second relative orientation in which they lie side by side. Each strut (86a) has a cam (90a) arranged to cause disengagement of the main pawl (68a) so as to initiate relative pivotal movement between the corresponding front and rear legs (16a) when the struts (86a) move away from their first relative orientation.

## Description

This invention relates to a push chair having two side assemblies secured spaced apart from and parallel to each other, each side assembly comprising a side coupling unit to which a front leg, a rear leg and a handle are each pivotally attached, each coupling unit including means for securing said front and rear legs at a predetermined relative orientation. The invention is particularly but not exclusively applicable to a pushchair of the type having a frame which can be folded both so as to bring the seat towards the plane of the wheels and so as to bring opposite sides of corresponding frame members of the pushchair closer to each other.

According to the invention, in one aspect, in a push chair of the type described above, each coupling unit has a main pawl arranged to engage with a detent to secure the front and rear legs in said predetermined relative orientation, and cam means arranged to cause disengagement of said main pawl.

According to the invention, in another aspect, a push chair of the type described above has a pair of struts each of which is pivotally connected at one end to a respective side coupling unit and connected at its other end to a central pivot joint arranged to allow the two struts to pivot relative to one another between a first relative orientation in which they are in line with or at an obtuse angle to one another so as to resist movement of the coupling units towards one another and a second relative orientation in which they lie side by side, each strut having link means in operative relation with the corresponding coupling unit and arranged to initiate relative pivotal movement between the corresponding front and rear legs when the struts move away from their first relative orientation.

Preferably the coupling units of the side assemblies are connected to opposite side edges of a rectangular semi-rigid panel, such as a seat panel, which is foldable along at least one fold line extending parallel to the side assemblies but which resists relative movement between said coupling units in a direction parallel to said side edges.

Two embodiments of the invention will now be described, by way of example, with reference to the accompanying drawings, in which:
Figure 1 is a side view of a pushchair in accordance with a first embodiment of the invention in its erect position;
Figure 2 is a side view of the folding mechanism of the pushchair shown in Figure 1, with the handle and the outer side member removed;
Figure 3 is a cross-sectional view taken on the line 3-3 in Figure 2;
Figure 4 is a cross-sectional view taken on the line 4-4 in Figure 2;
Figure 5 is a side view, similar to Figure 1, but showing the pushchair in its folded position;
Figure 6 is a side view similar to Figure 2 but with the mechanism in its folded position;
Figure 7 is a cross-sectional view taken on the line 7-7 in Figure 6;
Figure 8 is a fragmentary front view of the seat portion of the pushchair in its erect position as shown in Figure 1;
Figure 9 is a front view, similar to Figure 8, but with the pushchair in its folded position as illustrated in Figure 5;
Figure 10 is a partially broken away side view, on an enlarged scale, illustrating the lower part of the handle of the pushchair shown in the Figure 1;
Figure 11 is a cross-sectional view taken on the lines 11-11 in Figure 2;
Figure 12 is a cross-sectional view taken on the line 12-12 in Figure 1;
Figure 13 is a front view of the upper end of the handle of the pushchair shown in Figure 1, in its erect position;
Figure 14 is a front view of the footrest of the pushchair shown in Figure 1, in its erect position;
Figure 15 is a plan view of the footrest shown in Figure 14;
Figure 16 is a cross-sectional view on the line 16-16 in Figure 14;
Figure 17 is a view from the rear and above of a safety bar for the pushchair shown in Figure 1;
Figure 18 is a side view, on an enlarged scale, illustrating the connection of the bumper bar shown in Figure 17, to the pushchair;
Figure 19 is a rear view of the components shown in Figure 18;
Figure 20 is a cross-sectional taken on the line 20-20 in Figure 19;
Figure 21 is a front view of a shopping box for use with the pushchair shown in Figure 1;
Figure 22 is a rear view of the shopping box shown in Figure 21;
Figure 23 is a cross-sectional view of one front corner of the shopping box shown in Figures 21 and 22, taken on the line 23-23 in Figure 22;
Figure 24 is a side view similar to Figure 5 of an alternative folding mechanism for a pushchair in accordance with a second embodiment of the invention; and
Figure 25 is a sectional view, similar to Figure 10, of a pushchair having the folding mechanism illustrated in Figure 24.

Pushchairs in accordance with the invention are generally symmetrical about their longitudinal central plane. In the following description, components on opposite sides of such central plane which are substantially identical to one another will be denoted by the same reference numerals, those on the left-hand side having suffix a and those on the right-hand side having suffix b.

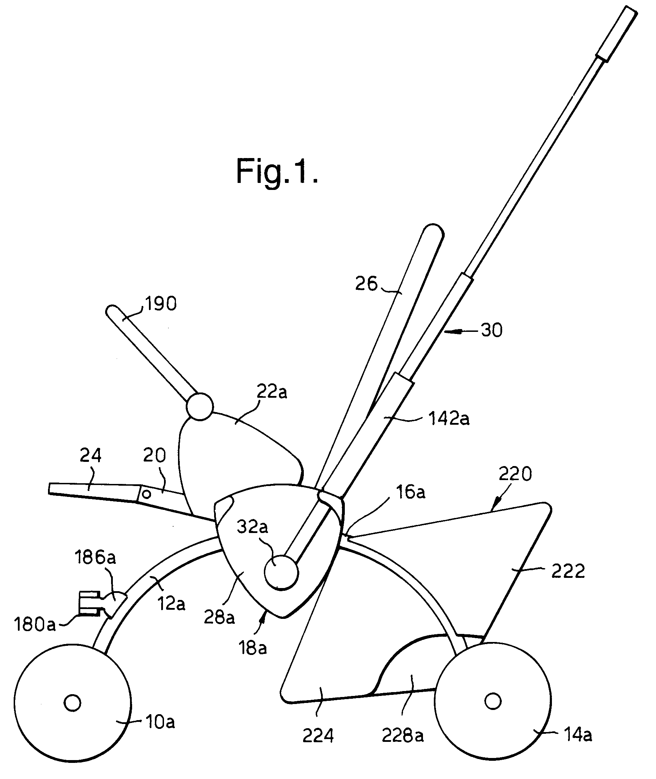

Referring to Figure 1, the left-hand side of a pushchair in accordance with the invention comprises a front wheel 10a supported on a front leg 12a and a rear wheel 14a supported on a rear leg 16a. The front and rear legs 12a and 16a have their upper ends connected by a coupling unit 18a (hereinafter called a "heart unit" because of its shape) which will be described in more detail hereinafter.

The pushchair has a seat portion 20 pivotally coupled to the inside of the heart unit 18a. The seat portion 20 has an arm rest 22a on its left-hand side and a corresponding arm rest 22b on its right-hand side. A leg rest 24 is pivotally attached to the front end of the seat portion 20 and can be secured in two or more alternative positions. A backrest 26 is mounted on a side member 26a which is also pivotally attached to the inside of the heart unit 18a.

The heart unit 18a includes an outer heart plate 28a to which a handle assembly 30 is attached by a pivot joint 32a. The handle assembly 30 will be described in more detail hereinafter.

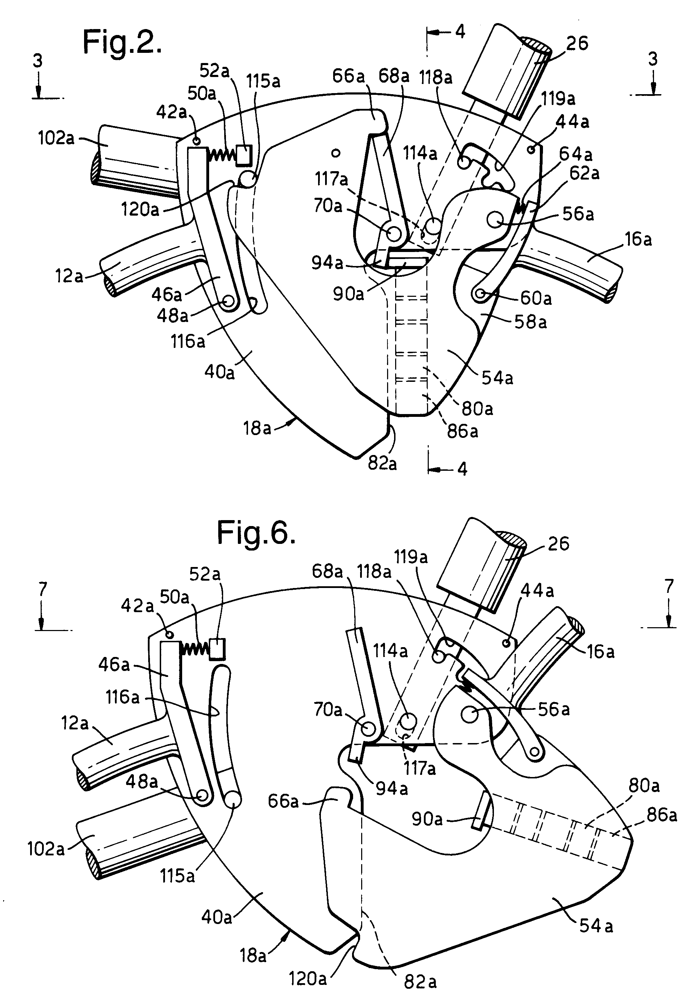

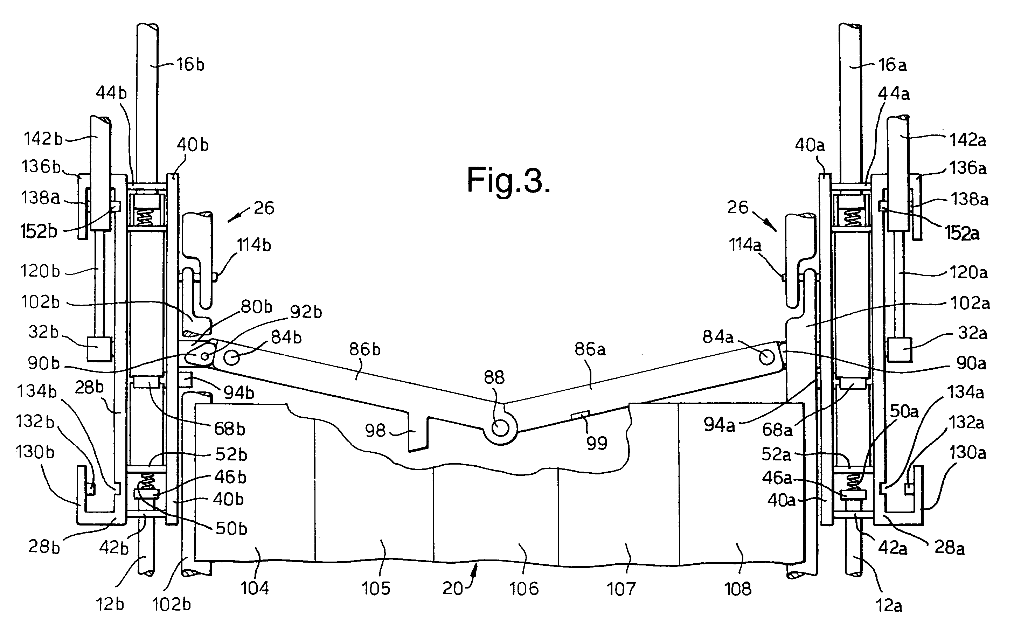

Referring now to Figure 2, from which the outer heart plate 28a has been removed, the heart assembly 18a also includes an inner heart plate 40a which is secured to the outer heart plate 28a by spacers 42a and 44a extending between their top corners respectively so as to hold the two heart plates 28a and 40a parallel to one another but spaced apart with a gap therebetween. The upper end of the front leg 12a projects between the two heart plates 28a and 40a where it is secured to a lever 46a which has its lower end pivotally mounted on a pivot pin 48a extending between the two heart plates 28a and 40a. The lever 46a is biassed in the anti-clockwise direction, as viewed in Figure 2, by a compression spring 50a which abuts against a stop 52a extending between the heart plates 28a and 40a, thus providing a resilient connection between the front wheel 10a and the heart unit 18a (see Figure 3).

A rear wheel support member 54a is pivotally mounted on a pivot pin 56a which extends between the two hearts 28a and 40a. The rear wheel support member 54a has a region 58a of reduced thickness in which a pivot pin 60a supports a lever 62a to which the upper end of the rear leg 16a is secured. A compression spring 64a acts against an edge of the support member 54a to urge the lever 62a in a clockwise direction as viewed in Figure 2. The action of compression springs 50a and 62a on the front and rear legs 12a and 16a respectively provides a resilient suspension for the pushchair.

The support member 54a has a nose 66a which is engaged by a main pawl 68a mounted on a pivot pin 70a secured to the inner heart plate 40a and biases anticlockwise by a spring (not shown). When the main pawl 68a is in the position shown in Figure 2, it prevents anticlockwise rotation of the intermediate member 54a about its pivot pin 56a due to the upward force exerted by the rear wheel 14a on the rear leg 16a.

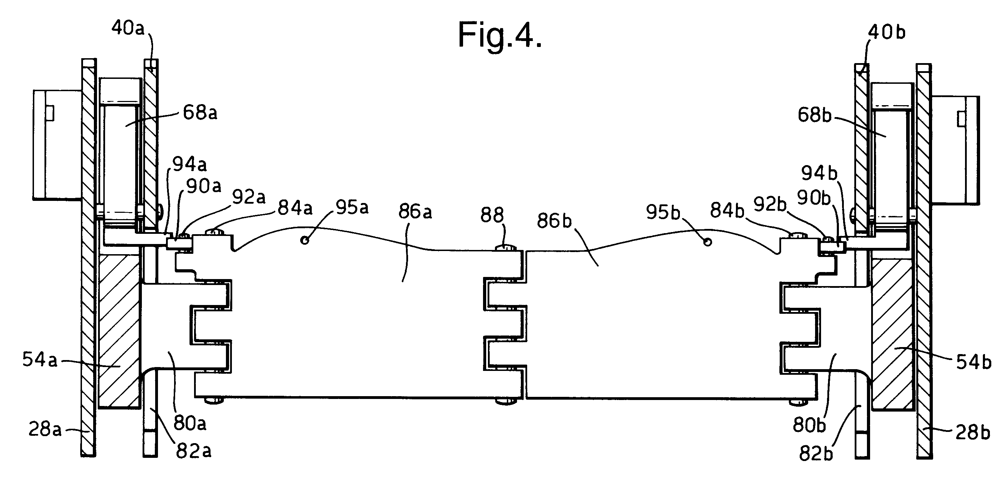

Referring to Figures 3 and 4, each of the rear wheel support members 54a and 54b has an inwardly directed hinge part 80a, 80b projecting inwardly past the rear edge 82a, 82b of the lower part of the corresponding inner heart plate 40a, 40b and carrying a respective vertical pivot pin 84a, 84b. A transverse strut formed from left and right-hand struts 86a and 86b interconnected by a central pivot pin 88. This strut has its ends journalled on the pivot pins 84a and 84b. The struts 86a and 86b have abutting surfaces which prevent forward movement of the pivot pin 88 beyond the position illustrated in Figure 3, while permitting rearward movement to allow the struts fold against one another as will be described hereinafter.

Beyond the pivot pins 84a and 84b each of the struts 86a and 86b carries a respective auxiliary pawl 90a, 90b mounted on a pivot pin 92a, 92b each of which is spring-biased in a rearward direction. The main pawls 68a and 68b have inwardly directed lateral projections 94a and 94b which extend into alignment with the auxiliary pawls 90a and 90b respectively.

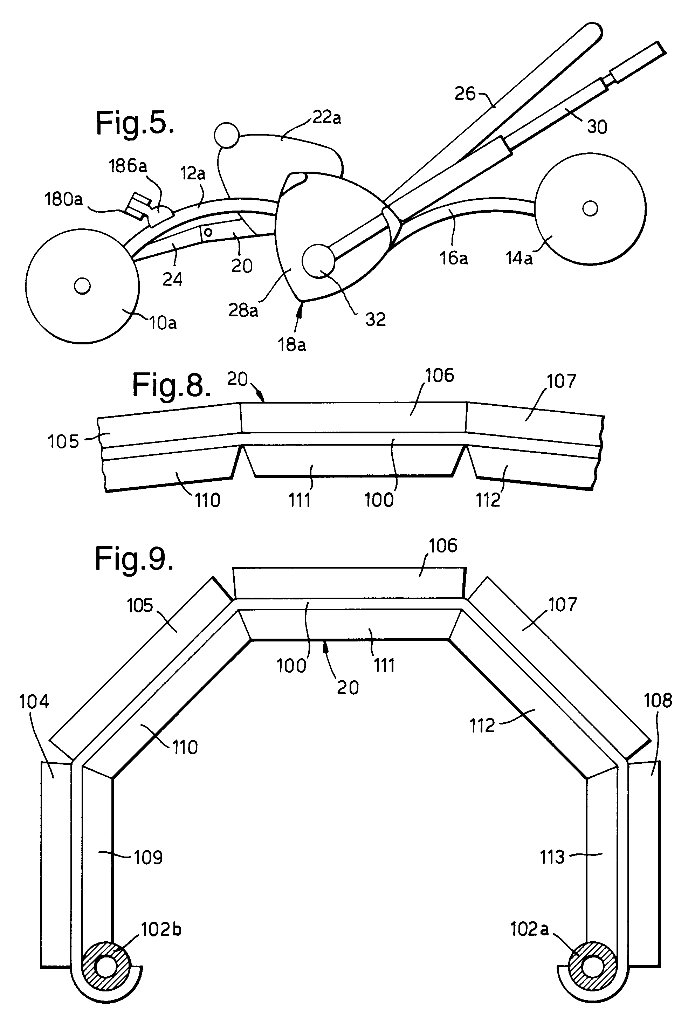

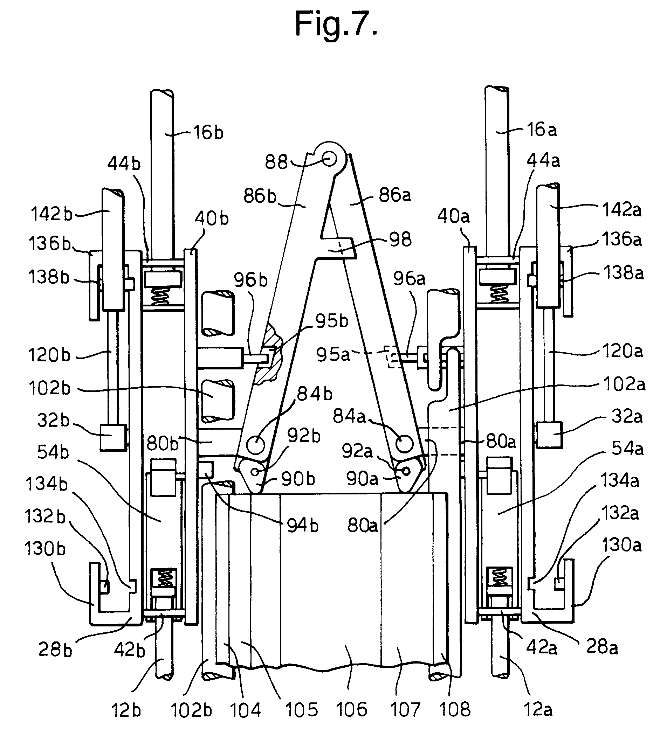

Referring to Figures 5, 6 and 7, when the pushchair is to be folded, the pivot 88 interconnecting the struts 86a and 86b is pulled rearwardly so that the auxiliary pawls 90a and 90b come into contact with the projections 92a and 92b on the main pawls 68a and 68b, thus displacing them in the clockwise direction as viewed in Figures 2 and 6. As soon as the upper ends of the main pawls 68a and 68b are out of engagement with the noses 66a and 66b on the rear wheel support members 54a and 54b, the rear legs 16a and 16b, are free to pivot into the orientation shown in Figure 5. The pawls 68a and 68b are spring biassed in the anti-clockwise direction as viewed in Figures 2 and 6 so that, When the rear wheel support members 54a and 54b are clear of the noses 66a and 66b each main pawl 68a, 68b is moved clockwise by its biassing spring to the position shown in Figure 5, further clockwise movement being limited by engagement of a lateral projection thereon (not shown) in a slot in the corresponding inner heart plate 40a, 40b.

In order to secure the rear legs in their folded position, as illustrated in Figure 5, the struts 86a and 86b have respective side bores 95a and 95b which are engaged by projecting pegs 96a and 96b on the inner heart plates 40a and 40b as shown in Figure 7. A resilient catch 98 on the strut 86b engages with a detent formation 99 on the strut 86a to hold the two struts 86a and 86b together in their folded position.

When the pushchair is to be unfolded into its erect position shown in Figure 1, the catch 98 is released and the two heart units 18a and 18b are pulled apart slightly so as to disengage the pegs 96a and 96b. The rear legs 16a and 16b are then free to pivot in the clockwise direction about their pivot pins56a and 56b as viewed in Figures 1, 2, 5 and 6. The nose 66a, 66b on each rear wheel support member 54a, 54b displaces the corresponding main pawl 68a, 68b in the clockwise direction about its pivot pin 70a, 70b until the upper end of each main pawl 68a, 68b can move under the projection 66a, 66b to lock the corresponding rear wheel support member 54a, 54b in the position shown in Figure 2. During this movement, the auxiliary pawls 90a and 90b pivot on their pivot pins 92a and 92b against the action of their biassing springs as they pass the projections 93a and 93b on the bottom ends of the main pawls 68a and 68b.

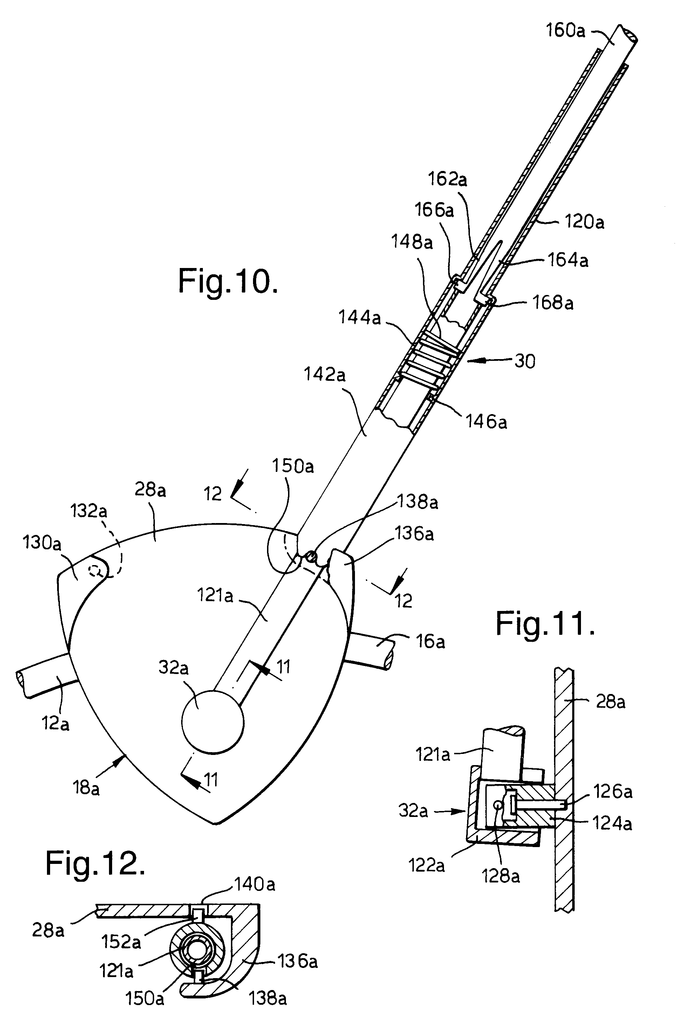

Referring to Figures 8 and 9, the seat portion 20 is formed from a flexible web 100 extending between longitudinal tubular side members 102a and 102b. Five (or more) upper slats 104-108 are glued to the upper surface of the web 100 and a corresponding number of lower slats 109-113 are glued to the lower surface thereof. The lower slats are of trapezoidal cross-section, their lower surfaces being narrower than their upper surfaces so as to permit the seat portion 20 to fold as illustrated in Figure 12. The upper slats 104-108 are also of trapezoidal cross-section but the difference in width between their upper and lower surfaces is relatively small and is chosen so that, when fully unrolled as illustrated in Figure 11, the seat portion 20 is slightly bowed upwardly. This ensures that, when the pushchair is folded, the seat portion 20 always folds upwards and there is no risk of the upper slats 104-108 being wedged in a plane and thus resisting folding.

The leg rest 24 is constructed in a similar manner to the seat portion 20, with two side members pivotally connected to the side members 102a, 102b of the seat portion and five pairs of upper and lower slats secured to a flexible web extending therebetween. The backrest is also constructed in a similar manner to the seat portion 20, with five pairs of upper and lower slats secured to a flexible web extending between the side members 26a, 26b.

As can best be seen in Figure 3, the side members 102a and 102b are mounted on pivot pins 114a, 114b which project inwardly from the inner heart plates 44a, 44b respectively. As can best be seen from Figures 2 and 6, the side member 102a has a peg 115a projecting through an arcuate slot 116a in the inner heart plate 40a. When the pushchair is in its erect position, the peg 115a rests on a shoulder 120a on the rear wheel support member 54a and is maintained thereby at the upper end of the slot 116a so that the seat portion 20 is supported in the orientation shown in Figure 1. When the pushchair is folded, the peg 115a is allowed is move to bottom of the slot 116a, as illustrated in Figure 6, so that the seat portion 20 comes into approximate alignment with the front legs 12a and 12b as illustrated in Figure 5.

As can be seen in Figure 2, the backrest side member 26a, has an elongate slot 117a which engages on the pivot pin 114a. A latching pin 118a on the side of the support member 26a engages in an arcuate slot 119a in the inner heart plate 40a centred on the pivot pin 144a. The slot 119a has three notches in its lower edge in which the latching pin 118a engages, the slot 117a allowing the latching pin 118a to be moved between notches as the side member 26a moves to vary the inclination of the backrest. The other side member 26b is similar. The backrest must be put into its most upright position (as shown in Figure 3) prior to folding when the pushchair.

Referring to Figures 10, 11 and 12, the lower part of the handle assembly 30, on the left-hand side of the pushchair comprises a bottom tubular member 121which is coupled to the pivot joint 32a. As shown in Figure 11, the joint 32a consists of an outer cylindrical cap 122a and an intermediate member 124a which is pivotally mounted on a pivot pin 126a secured to the outer heart plate 28a. The intermediate member 124a is connected to the outer cap 122a by a trunnion 128a and a corresponding diametrically aligned trunnion (not shown) which engage in respective holes in the cylindrical walls of the cap 122a. This connection permits limited angular movement of the lower member 122a of the handle assembly 30 relative to the intermediate member 124a about the axis of the trunnions.

At its upper front corner, the left-hand outer heart plate 28a has an outwardly extending rearwardly directed hook formation 130a with a peg 132a on its inner face confronting the outer face of the heart plate 28a. As can be seen in Figures 3 and 7, the heart plate 28a has a slot 134a extending downwardly from its upper edge opposite to the peg 132a. Similarly, at its upper rear corner, the outer heart plate 28a has a rearwardly and outwardly facing hook formation 136a (shown partially broken away in Figure 10) with an inwardly directed peg 138a and a slot 140a (see Figure 12) opposite 138a. The lower member 12a of the handle 30 is surrounded by a slidable sleeve 142a which is biassed downwardly by a compression spring 144a engaging between a shoulder 146a on the inner wall of the sleeve 142a and a flange 148a on the lower member 121a. At its bottom end, the sleeve 142a has a notch 150a arranged to engage with the peg 138a and a peg 152a arranged to engage in the slot 140a (see Figure 12). If the sleeve 142a and the other sleeve 142b on the other side of the pushchair are pulled upwardly, the handle can be pivoted forwardly from the position shown in Figures 1 and 10, so as to engage in the hook formations 130a and 130b at the other ends of the heart plates 28a and 28b thereby converting the pushchair to a configuration in which the child occupant faces rearwardly. It is necessary for the handle to be returned to the forward facing configuration, as shown in Figure 1, before the pushchair is folded.

An upper handle member 160a is received telescopically within the upper end of the lower handle member 121a. At its bottom end, the upper handle member 160a has two resilient fingers 162a and 164a on its lower end with outwardly directed lugs 166a and 168a which engage in holes through the side walls of the lower handle member 121a just below the top of the sleeve 142a. The lugs 166a and 168a have flat upper and lower edge faces so that, when engaged, they establish a positive connection resisting relative axial movement between the lower and upper handle members 121a and 160a when engaged in their respective holes. In contrast, the side faces of the lugs 166a and 168a are in the form of ramps so that the lugs disengage from their holes in the event of angular movement of the upper handle member 160a relative to the lower handle member 121a.

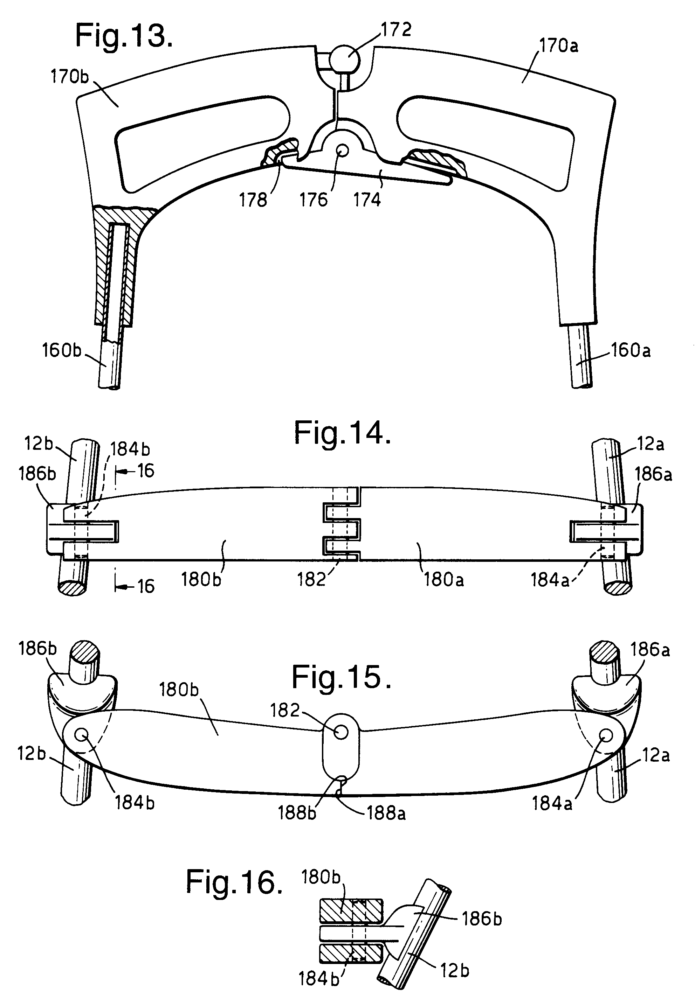

Referring to Figure 13, the upper ends of the upper handle members 160a and 160b are fast with respective L-shaped hand grip members 170a and 170b. The free ends of the horizontal limbs of the hand grip members 170a and 170b are interconnected by a pivot joint 172, which is constructed to allow a limited amount of universal movement. A latching lever 174 is mounted a pivot pin 176 carried by the left-hand grip member 170a and engages in the a groove 178 in the other hand grip member 170b. If the opposite end of the lever 174 is pressed, the lever 174 disengages from the groove 178 allowing the two hand grip members 170a and 170b to pivot relative to one another. Consequently, when the pushchair is folded to bring the two heart units 18a and 18b towards one another, as illustrated in Figure 7, the two hand grip members 170a and 170b pivot in a similar manner to the struts 86a and 86b. The resulting relative angular movement between the upper and lower handle members 121a, 121b and 160a, 160b, causes the lugs 166a and 168a and the corresponding lugs (not shown) on the bottom end of the upper handle member 160b to disengage from their holes in the lower handle members 142a and 142b. This allows the upper handle members 160a and 160b to slide downwardly within their respective lower handle members 121a and 121b. The lugs 166a and 168a then engage in alternative holes in the lower handle member 142a so as to secure the handle assembly 30in its collapsed position. During this folding and telescoping movement, the angle between the handle members on opposite sides of the pushchair changes by about 4°. This change is readily accommodated by the universal joint 172 and the pivot joints 32a, 32b, connecting the handle assembly 30, to the heart units 18a 18b.

Referring to Figures 14, 15 and 16, a footrest formed from two footrest halves, 180a and 180b extends between the front legs 12a and 12b. The two footrest halves 180a and 180b are interconnected by a vertical pivot pin 182 and have their outer ends coupled by respective vertical pivot pins 184a, 184b to respective brackets 186a, 186b on the front legs 12a and 12b. When the pushchair is folded, the pivot pin 182 moves forwardly, the two footrest halves having abutting faces 188a and 188a which prevent pivotal movement in the opposite direction. Preferably, when the pushchair is in its erect position with the footrest as shown in Figures 14 and 15, the pivot pin 182 is slightly in front of the pivot pins 184a and 184b so as to give the footrest an inherent tendency to fold forwardly.

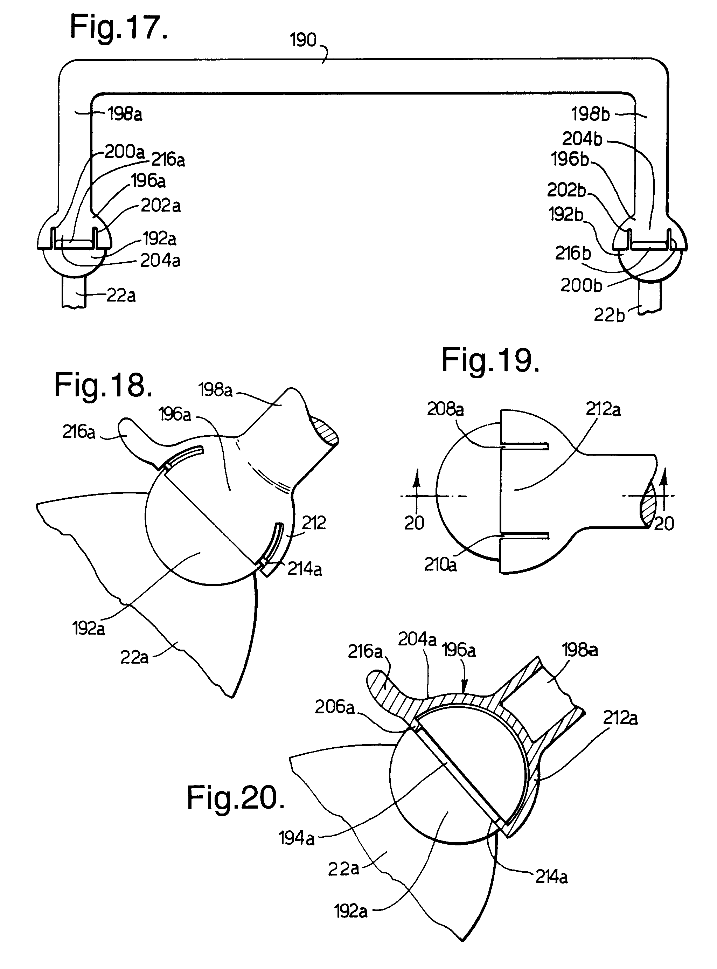

Referring to Figures 17 to 20, a safety bar 190 (commonly called a "bumper bar") can be fitted to the armrests 22a and 22b. Secured to the upper edge of each armrest 22a, 22b is a respective spherical formation 192a, 192b, each of which has a circumferential groove 194a, 194b (Figure 20). The safety bar 190 is generally U-shaped and has concave hemispherical clips 196a, 196b on the ends of its limbs 198a, 198b. The left-hand side clip 196a has a pair of slits 200a and 200b bounding a resilient tab 204a having a rib 206a which engages in the groove 194a. Similarly, on its lower side, the clip 196a has two slits 208a, 210a which bound a resilient tab 212a having a rib 214a which engages in the groove 194a. The resilience of the tabs 204a and 212a allows the clip 196a to be snap-fitted onto the spherical formation 192a. The upper tab 204a carries a finger grip 216a to allow the projection 206a to be displaced out of the groove 194 when the safety bar 190 is to be removed. The detachment of the clip 196b on the other side is carried out in a similar fashion. It will be appreciated that, since the safety bar 190 is a one-piece unit, its removal (or at least its disconnection at one end) is necessary before the pushchair can be folded.

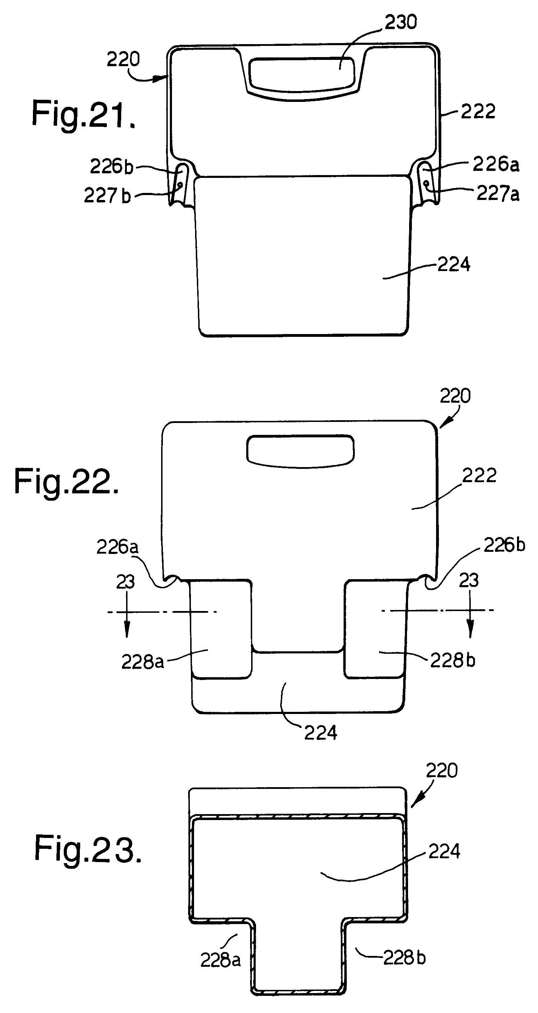

Turning now to Figures 1, 21, 22 and 23, a shopping box 220 which may be formed as a one-piece rigid moulding, a wire structure, solid panels or a combination of these modes of construction, is installed between the rear legs 16a and 16b. The shopping box has an upper portion 222 which is wider than its lower portion 224. On each side of the box 220, between the two portions 222 and 224 there is an arcuate surface containing a groove 226a, 226b which engage round the rear legs 16a, 16b, respectively. Each groove 226a, 226b has a respective projecting peg 227a, 227b which engage in complementary holes (not shown) in the upper surfaces of the rear legs 16a, 16b. The box 220 has recesses 228a, 228b to accommodate the rear wheels 14a, 14b respectively. A cut-out 230 in the rear wall forms a handle by which the shopping box 220 can be lifted clear of the pushchair. It will be realised that it is necessary to remove the shopping box 220 before the pushchair is folded. Any contents can be left in the shopping box when it is removed.

When the pushchair is to be folded, safety bar 190 and the shopping box 220 are removed. The backrest 26 is put into its most erect position and the handle 30 positioned in the forward facing mode, as illustrated in Figure 1. Next, the catch 174 (Figure 13) at the centre of the handle assembly 30 is disengaged and the grip portions 170a and 170b twisted to move the central pivot 172 rearwardly. This twisting action disengages the projections 166a, 168a from the lower tubular section 121a (Figure 10) and the corresponding projections on the other side of the pushchair, allowing the upper handle sections 160a, 160b to telescope within the lower sections 121a 121b. Next, the pivot joint 88 at the centre of the struts 86a, 86b is pulled rearwardly. The auxiliary cams 90a and 90b cause disengagement of the main cams 68a, 68b as described above (Figures 2 and 3), thus allowing the rear legs 16a and 16b to pivot upwards.

Next, the two heart assemblies 28a and 28b are pushed towards one another. The resulting continued angular movement of the upper handle tubes 160a, 160b relative to the lower handle tubes 121a and 121b causes the detents 166a, 166b and 168a, 168b to engage in further holes in the lower tubular members 121a, 121b to secure the handle in its telescoped condition. The two sides of the pushchair are then held together by engagement of the resilient catch 98 on the strut 86b with the detent formation 99 on the other strut 86a (see Figures 3 and 7). The pegs 96a, 96b engage in the holes 95a, 95b in the sides of the struts 86a, 86b, thereby keeping the rear legs 16a, 16b in position relative to the handle assembly 30.

When the pushchair is to re-erected, the catch 98 is first disengaged and the pivot joint 88 then pushed forward to the position illustrated in Figure 3. The resulting angular movement of the upper handle tubes 160a, 160b relative to their lower handle tubes 121a, 121b disengages the detents 166a, 166b and 168a, 168b allowing the upper handle tubes 160a, 160b to be pulled out to their maximum extent. Erection of the pushchair of the pushchair is completed by re-engaging the latch 174 (Figure 13).

The above embodiment may be modified by omitting the springs 50a and 64a and rigidly connecting the legs 12a and 16a to the heart unit 18a and the rear wheel support member 54a respectively.

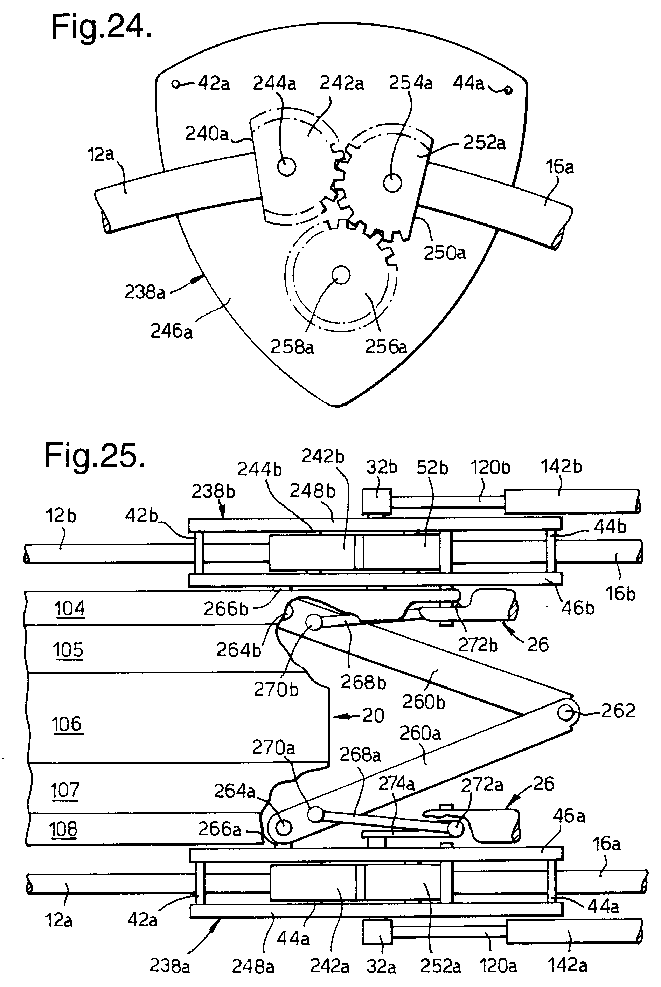

Figures 24 and 25 illustrate a second embodiment of the invention. The seat, leg rest, backrest, footrest and shopping box are identical with those of the first embodiment and (where shown) are denoted by the same reference numerals. They will not be described again in detail. In addition, the front and rear legs 12a, 12b and 16a, 16b are of generally the same configuration as those of the first embodiment. However, within the coupling unit 238a, the upper end of the front leg 12a is secured to a flat face 240a formed on a tooth segment 242a which is journalled on an axle 244a mounted between substantially identical inner and outer hear plates 246a and 248a. Similarly, the rear leg 16a is secured to a flat face 250a of a second tooth segment 252a which is journalled on a shaft 254a extending between the inner and outer heart plates 246a and 248a. The gear segment 252a is in mesh with the first gear segment 244a and also with a pinion 256a which is mounted fast with the shaft 258a. The shaft 258a is journalled in the heart plates 246a and 248a and has a projecting end to which the pivot joint 32a of the handle assembly is secured.

A pair of cross struts 260a and 260b are pivotally interconnected by a central pivot pin 262 and are pivotally mounted on outer pivot pins 264a and 264b which are mounted on brackets 266a, 266b secured to the inner faces of the inner heart plates 246a and 246b. Connecting links 268a, 268b have universal pivot joints 270a, 270b at one end, connected to the struts 260a, 260b a short distance from the pivot pints 264a, 264b. At their other ends, the links 268a, 268b are connected by universal joints 272a, 272b to cranks 274a, 274b which are secured on the inner ends of the shaft 258a, 258b for angular movement therewith.

When the pushchair is erect, the handle is secured by a latching (not shown) in its normal orientation. When the pushchair is to be folded, this latch is released and the handle 30 moved downwards towards the rear legs 16a and 16b. This causes clockwise movement of the pinion 256a, which in turn causes anti-clockwise movement of the gear segment 252a to which the rear leg 16a is secured, and clockwise movement of the gear segment 242a to which the front leg 12a is secured. The result is to bring the handle 30, the front legs 12a and 12b and the rear legs 16a and 16b into substantial alignment with one another. At the same time, the angular movement transmitted by the shaft 258a to the cranks 274a and 274b caused the links 268a and 268b to pull the struts 260a and 260b rearwardly so that they fold into the position illustrated in Figure 25.

In either of the above embodiments, the spacers 42a and 44a between the outer and inner heart plates 28a and 40a may take the form of integral projections on one or both of the heart plates.

The tubular side members 102a and 102b of the seat portion 20 may be replaced by components formed integrally with the adjacent slats. Alternatively, the entire seat portion may be formed as a single injection moulding. Similar modifications can be made to the footrest 24 and the backrest 26.

## Claims

1. A push chair having two side assemblies secured spaced apart from and parallel to each other, each side assembly comprising a side coupling unit (18) to which a front leg (12), a rear leg (16) and a handle (30) are each pivotally attached, each coupling unit (18) including means for securing said front and rear legs (12, 16) at a predetermined relative orientation, characterised in that each coupling unit (18) has a main pawl (68) arranged to engage with a detent (66) to secure the front and rear legs (12, 16) in said predetermined relative orientation, and cam means (90) arranged to cause disengagement of said main pawl (68).

2. A push chair having two side assemblies secured spaced apart from and parallel to each other, each side assembly comprising a side coupling unit (18, 238) to which a front leg (12), a rear leg (16) and a handle (30) are each pivotally attached, each coupling unit (18, 238) including means for securing said front and rear legs (16) at a predetermined relative orientation, characterised by a pair of struts (86, 260) each of which is pivotally connected at one end to a respective side coupling unit (18, 238) and connected at its other end to a central pivot joint (88) arranged to allow the two struts (86, 260) to pivot relative to one another between a first relative orientation in which they are in line with or at an obtuse angle to one another so as to resist movement of the coupling units (18, 238) towards one another and a second relative orientation in which they lie side by side, each strut (86, 260) having link means (90, 268) in operative relation with the corresponding coupling unit (18, 238) and arranged to initiate relative pivotal movement between the corresponding front and rear legs (16) when the struts (86) move away from their first relative orientation.

3. A push chair according to claim 2, wherein each coupling unit (18) has a main pawl (68) arranged to engage with a detent (66) to secure the front and rear legs (12, 16) in said predetermined relative orientation, and said link means comprises cam means (90) on the corresponding strut (86) arranged to cause disengagement of said main pawl (68).

4. A push chair according to claim 1 or 3, wherein each side coupling unit (18) comprises first and second coupling members (18, 54) each having a respective leg (12, 16) mounted thereon, the main pawl (68) being pivotally mounted on the first coupling member (18) and the corresponding strut (86) being pivotally mounted on the second coupling member (54).

5. A push chair according to claim 4, wherein said cam means comprises an auxiliary pawl (90) pivotally mounted on the corresponding strut (86).

6. A push chair according to claim 4 or 5, further comprising a seat portion (20) pivotally mounted on the first coupling member (18) and having a projection (115) engaging with a complementary formation (120) on the second coupling member (54) to control the orientation of the seat portion (20) relative to the first coupling member (18).

7. A push chair according to claim 2, wherein each coupling unit (238) comprises a first gear segment (242) fast with the front leg (12) and a second gear segment (252) fast with the second leg and in mesh with the first segment (242), the link means comprising a rigid link (268) having one end pivotally connected to the corresponding strut (260) and its other end pivotally connected to a crank (274) coupled for angular movement in synchronism with the first gear segment (242).

8. A push chair according to claim 7, wherein the handle (30) is coupled for angular movement in synchronism with each of the cranks (274).

9. A push chair according to any preceding claim, wherein the handle comprises a respective lower handle member (121) connected to each side coupling unit (18, 238) and a respective upper handle member (160) is connected to the corresponding lower handle member (121) by a respective telescopic joint which permits relative angular and axial movement, the upper ends of the upper handle members (160a, 160b) being pivotally interconnected, each telescopic joint including latching means (166, 168) arranged to latch either with the telescopic joint at minimum overlap and the handle side members (121, 160) spaced apart to the maximum extent or with the telescopic joint at maximum overlap and the handle side members (121, 160) spaced apart to the minimum extent, and to release in response to relative angular movement of the lower handle member (121) and the upper handle member (160).

10. A push chair according to claim 9, wherein the upper handle members (160a, 160b) are pivotally interconnected by a universal joint (172).

11. A push chair according to claim 9 or 10, wherein the lower handle members (121) are connected to their respective side coupling units (18) by universal joints (32).

12. A push chair according to any of claims 2 to 11, having a footrest formed in two pivotally interconnected rigid parts having its ends pivotally connected to the front legs (12).

13. A push chair according to any preceding claim, wherein the side coupling units (18, 238) are connected to opposite side edges of a rectangular semi-rigid panel (20, 26) which is foldable along at least one fold line extending parallel to the side assemblies but which resists relative movement between said coupling units (18) in a direction parallel to said side edges.

14. A push chair according to claim 13, wherein said semi-rigid panel is a seat panel (20).

15. A push chair according to claim 13 or 14, wherein said semi-rigid panel is a backrest (26).

16. A push chair according to any preceding claim, having a detachable safety bar (190) extending between each side coupling unit (18, 238).

17. A push chair according to any preceding claim, having a detachable shopping container mounted between the rear legs (16).
